# EUROPEAN PATENT APPLICATION

(11) **EP 1 832 375 A1**
(43) Date of publication of application: **12.09.2007**
(21) Application number: 07380062.5
(22) Date of filing: 05.03.2007
(51) Int. Cl.: B23K 26/00, B23K 26/08, B23K 26/40, B41M 5/26, D06C 23/00, D06Q 1/00

(54) **Improvements in the marking of characters on textile materials by laser beams**

(30) Priority: 07.03.2006 ES 200600556
(71) Applicant: Macsa ID, S.A., 08240 Manresa (ES)
(72) Inventor: Vogler, Sven, 08240 Manresa (Barcelona) (ES); Boira Plans, Valenti, 08240 Manresa (Barcelona) (ES)
(74) Representative: Durán Moya, Luis-Alfonso

(57) **Abstract**

The improvements provide for the laser to be switched off in areas (A,BC) where the vectors (1,2,3) to be marked meet, leaving a gap between the vectors (1,2,3) to be joined, the size of which is imperceptible to the naked eye, thus avoiding irregularity in laser intensity at points where the vectors (1,2,3) to be marked meet.

## Description

The present invention relates to improvements introduced to the subject of the main patent no. 200302729 for a "procedure for marking textile materials by laser beams", which provides substantial novelty and inventive step to said main patent.

The present invention is the result of manufacturing practice obtained through the use of said main patent, and introduces improvements to the subject thereof.

The main patent relates to a process for actuating laser beams on each of the pixels into which the drawing to be produced is divided at a different speed corresponding to the grey tone of each pixel, while maintaining the power of the laser constant during the entire marking period, and switching on the laser by a predetermined period in advance before beginning the drawing, to obtain stabilisation of the bundle of laser beams.

Among other marking problems, which it aims to solve, the main patent provides a solution to the excessive marking effect of the first pulse of a vector, by which when the laser is switched on again, it generates pulses of greater power which produce too strong a mark, and may even burn the textile medium, when marking fabrics. In accordance with the practice obtained by carrying out the process that is the subject of the main patent, it has been observed that the same pulse marking effect occurs at certain junctions of two vectors, for example, at the junctions required to compose a written character.

In fact, in the circumstances indicated, when the galvanometer of the laser equipment is moved in a direction, it must be halted and take a different direction if there is a junction of two vectors, for example, the apex of an A. At this point, the same effect occurs since a stopping point is reached before taking a different direction and therefore at this point, the time taken to overcome the inertia of the mirror causes the loss of microseconds, which produces a visual start-of-marking pulse effect.

To overcome the aforementioned problem, the present invention provides for the avoidance of movement through stopping points with the laser beam when it is marking, and provision is therefore made for the laser beam not to be actuated when the galvanometer is subject to mechanical inertia, in other words, for the movement through stopping points to always occur with the laser switched off.

To perform this action, the process provides for the path to begin in a different position at the start of the vector, in a theoretical extension of the vector, so that when the galvanometer is subject to inertia forces the laser is switched off but when it moves to a constant speed through the theoretical start point of the vector, the laser is then switched on thus avoiding the starting pulse.

The process can be applied both to continuous junctions of vectors, in which the marking laser beam must change trajectory while continuing marking, and to vector junctions created separately.

For continuous vector junctions, the process provides for the laser to be switched off for the period in which the galvanometer is overcoming the mechanical inertia for a period of a few microseconds, marking being controlled by giving the same amount of energy to the entire surface of the marked material. The unmarked distance or the distance with no contact is, according to the invention, a distance that can be regulated and adjusted depending on the material marked. Adjustment of said distance must be performed in such a way that it is so small that it is imperceptible to the human eye, producing an effect of visual continuity.

For junctions of vectors created separately marking begins in a similar way in a different start position following the theoretical extension of the vector and the laser beam is switched on at the start point of the vector, thus eliminating the start pulse and the unmarked distance is also controlled by regulating it both at the beginning and end of the vector at an imperceptible value thus producing an effect of visual continuity and uniform marking.

For a better understanding, the accompanying drawings are given as an explanatory but not limiting example of an embodiment of the improvements that are the subject of the present invention.

Fig. 1 shows diagrammatically an outline of a letter A based on a plurality of vectors with no junction between them.

Figs. 2, 3 and 4 relate, respectively, to the details A, B and C of the areas indicated in Fig. 1.

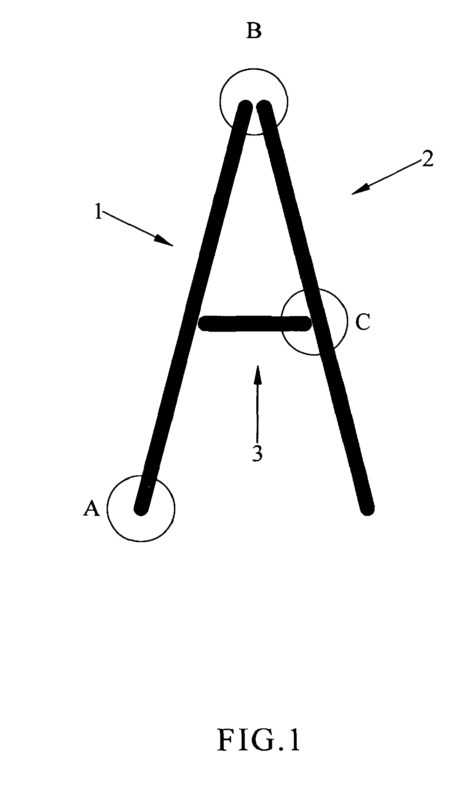

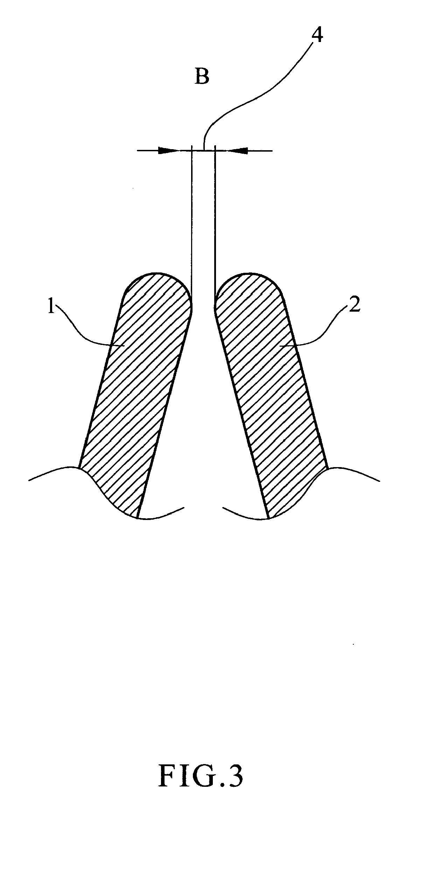

Illustrated in Fig. 1 is an outline representing the letter A formed by three vectors or outlines -1-, -2- and -3-, producing junction points in a conventional outline at the intersection of the vectors -1- and -2- and at the intersections of the vector -3- with the vectors -1- and -2-. The aim of the present improvements is to avoid the pulse effect at the intersection points of the vectors -1-, -2- and -3-, and also at the ends of the vectors -1- and -2-, provision being made for the laser to be switched off at the intersection points for a period corresponding to the inertia of the galvanometer at the change of direction at the intersection of the vectors -1- and -2-, or for a period that allows a small gap to be left between the ends of the vector -3- and the vectors -1- and - 2-. For better understanding the intersection of the vectors has been shown in the details B and C. When the vectors -1- and -2- intersect, the present improvements provide for the meeting point to be formed by two vectors separated very slightly from each other so as to define a gap indicated by the numeral -4- in Fig. 3, which represents a distance with no contact between the markings corresponding to the vectors, using a distance that is imperceptible visually. Thus, it is possible at the end of the trajectory of one of the vectors for the laser to be switched off and then after beginning the travel for the other vector at a point some distance from the apex of the corresponding vector, for the laser to be switched on again to mark the other vector. Thus, pulse effects from switching on the laser again are avoided and in practice the vectors of the outline appear to be actually joined to each other.

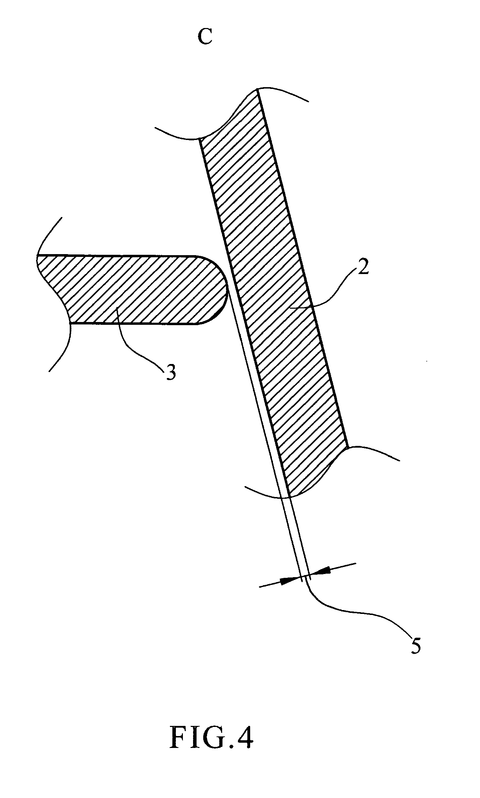

At the junction points between the vector -3- and the vectors -1- and -2-, as indicated in detail C of Fig. 4 for one of them, marking is performed in the same way, so that the vector -3- ends a short distance -5- from the vector -2-, thus achieving the visual effect of continuity, since said gap meets the same conditions as the gap -4- at the apex as explained above and, in addition, provides for the laser to be switched off at both the beginning and the end of the vector -3-.

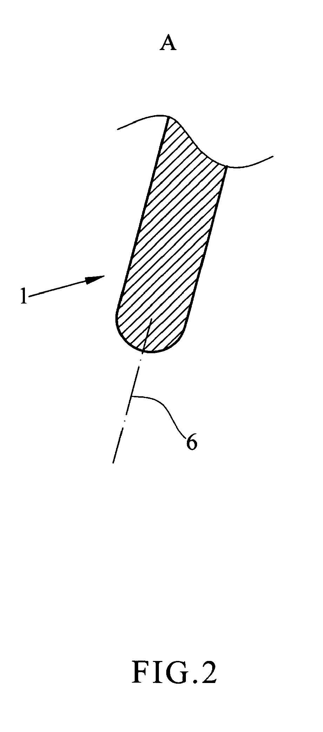

Similarly, at the ends of the vectors provision is made, as can be seen in Fig. 2 for the end of the vector, for the laser beam to start only in the portion corresponding to the vector but not in the initial portion -6- where there is dead travel with the laser switched off thus eliminating the pulses, which is one of the main objectives of the invention.

It will be understood that although the present invention has been explained based on the embodiments shown, it is not limited to said illustrations which are provided simply as an example and admit of variations within the content of the following claims including equivalents with different characteristics therefrom.

## Claims

1. Improvements in the marking of textile materials by laser beams **characterised in that** the laser is switched off in areas where the vectors to be marked meet, leaving a gap between the vectors to be joined, the size of which is imperceptible to the naked eye, thus avoiding irregularity in laser intensity at points where the vectors to be marked meet.

2. Improvements to the subject of the main patent no. 200302729 for "a process for marking textile material by laser beams", according to claim 1, **characterised in that** for junctions of vectors of the type known as continuous, with a first and second vector, the laser is stopped at the end of marking the first vector for a period corresponding to the mechanical inertia thereof, and the tracing of the second vector begins again after a certain travel from the theoretical extension of said second vector.

3. Improvements to the subject of the main patent no. 200302729 for "a process for marking textile material by laser beams", according to claim 1, **characterised in that** the unmarked gap between two vectors is regulated and adjusted according to the material to be marked.
